# EUROPÄISCHE PATENTSCHRIFT

(11) **EP 1 514 814 B1**
(45) Veröffentlichungstag und Bekanntmachung des Hinweises auf die Patenterteilung: **22.03.2006**
(21) Anmeldenummer: 04020261.6
(22) Anmeldetag: 26.08.2004
(51) Int. Cl.: B65G 21/06, B65G 21/22

(54) **Förderanlage**
Conveyor system
Système de transport

(30) Priorität: 10.09.2003 DE 10342109
(43) Veröffentlichungstag der Anmeldung: 16.03.2005
(73) Patentinhaber: MINDA Industrieanlagen GmbH, 32423 Minden (DE)
(72) Erfinder: Zeddies, Hubertus, Dr.-Ing, 30179 Hannover (DE)
(74) Vertreter: Stornebel, Kai

(56) Entgegenhaltungen:
- US-A1- 2003 047 426

## Beschreibung

Die Erfindung betrifft eine Förderanlage mit zumindest einer modularen Kunststoffkette zum Transport von Produkten, wobei die Kunststoffkette auf einer oder mehreren Gleitunterlagen entlanggleitet.

Förderanlagen mit modularen Kunststoffketten werden in vielen Bereichen zum Transport empfindlicher Produkte eingesetzt. Durch den gleitenden Abtrag der Kette auf einer glatten, ebenen Fläche können Produkte mit geringerer Standsicherheit, wie z. B. hochgestapelte Kartonagen, Paletten unterschiedlicher Form und Größe, in Säcken verpackte Schüttgüter und andere empfindliche Waren transportiert werden. Ebenfalls können Personen in Montagelinien synchron neben Werkstücken auf einer derartigen Förderanlage mitfahren und Montagearbeiten ausführen. Diese positiven Eigenschaften werden durch das erschütterungsfreie Gleiten der modularen Kette oder der modularen Ketten ohne jede Walkbewegung, wie sie z. B. beim Lauf über Tragrollen entstehen würden, ermöglicht.

Ein funktionsbedingter Nachteil dieses Fördererprinzips ist der im Vergleich zu einem rollenden Lastabtrag höhere Bewegungswiderstand, der durch die Gleitreibung hervorgerufen wird und einen Verschleiß der modularen Kette und der Gleitunterlagen bewirkt. Um diese Nachteile zu minimieren, werden spezielle Gleitunterlagen mit einem geringen Reibwert und einer hohen Verschleißfestigkeit eingesetzt. Diese Gleitunterlagen bestehen in vielen Einsatzfällen aus hochmolekularem Polyäthylen, welches als Folien, Platten oder Streifen auf der Förderanlage bzw. auf dem Maschinengestell befestigt wird.

Diese Gleitunterlagen haben allerdings nur eine geringe statische Festigkeit, so dass zusätzlich eine stabile Unterkonstruktion zur Aufnahme der auf der Kette abtragenden Last erforderlich ist. Auf diese Unterkonstruktion oder Fördererkonstruktion müssen die Gleitunterlagen dann befestigt werden. Diese Unterkonstruktion wird vielfach als Stecksystem ausgeführt, beispielsweise aus Aluminium-Steckprofilen.

Nachteilig an den oben genannten Gleitmaterialien ist die relativ starke Ausdehnung bei geringer Erwärmung sowie die starke Verformungsneigung. Dadurch wird ein aufwendiges Befestigungssystem der Gleitunterlage auf der Tragkonstruktion erforderlich.

Ein weiteres Problem der modularen Kunststoffketten auf einer Gleitunterlage aus hochmolekularem Polyäthylen besteht in der elektrostatischen Aufladung der auf der Förderanlage befindlichen Personen. In Folge des sehr hohen Oberflächenwiderstandes der Kette und der Gleitunterlage können elektrische Ladungen, die z. B. beim Gehen auf der Kette entstehen, nicht abgeleitet werden.

Aus der US 2003/0047426 A1 ist ein Kettenförderer-Führungssystem aus L-förmigen Profilen bekannt, die aus präzisionsbearbeitetem Polyethylen, wie UHMWPE oder mit Schmiermittel getränktem Holz bestehen. Die Profile werden über Halter in einem konstanten Abstand zueinander gehalten, wobei zur Ausbildung von Biegungen Profile mit einem konstanten Radius eingesetzt werden. Die Herstellung und der Aufbau solcher Profile ist relativ aufwendig.

Aufgabe der Erfindung ist es, eine Förderanlage bereitzustellen, die die oben angeführten Nachteile ausschließt oder minimiert.

Erfindungsgemäß wird diese Aufgabe dadurch gelöst, dass die Kontaktfläche der Gleitunterlage zu der Kunststoffkette aus einem Holzwerkstoff oder Holz besteht. Untersuchungen haben gezeigt, dass eine Gleitunterlage aus Holz, insbesondere aus Buchenholz in Verbindung mit einer modularen Kunststoffkette sehr gute Gleit- und Verschleißeigenschaften bietet, wobei elektrostatische Aufladungen über den Holzwerkstoff oder Holz abgeleitet werden. Entladungsschläge werden somit vermieden oder in der Stärke deutlich vermindert. Dabei ist es vorgesehen, die Platten als Gleitunterlage ohne eine aufwendige Befestigung einfach in die Förderkonstruktion einzulegen. Dadurch werden der Fertigungsaufwand der Förderanlage sowie gegebenenfalls später erforderliche Wartungsarbeiten erheblich verringert.

Eine Weiterbildung der Erfindung sieht vor, dass die Kontaktfläche der Gleitunterlage komplett aus Buchenholz besteht, wobei die Gleitunterlage selbst als Multiplexplatte, Sperrholzplatte, Spanplatte oder als MDF- bzw. HDF-Platte ausgebildet sein kann und mit einer Furnierschicht aus Holz bzw. Buchenholz versehen ist. Bei einer Verwendung sogenannter Multiplex- oder Sperrholzplatten, die verleimt sind oder als eine Spanplatte oder HDF- bzw. MDF-Platte mit einer Furnierschicht auf der Oberseite, auf der die Kunststoffkette entlanggleitet, erhält man einen Bauteil mit hoher statischer Festigkeit und Maßhaltigkeit sowie mit günstigen Gleit- und Verschleißeigenschaften. Eine solche Gleitunterlage kann in einer Förderanlage oder in einem Förderer mit modularer Kunststoffkette als Trag- und Gleitunterlage gleichermaßen verwendet werden. Dadurch kann der konstruktive Aufbau der Förderanlage bzw. des Förderers sehr einfach und kostengünstig gehalten werden. Eine Weiterbildung der Erfindung sieht vor, dass die Kontaktfläche der Gleitunterlagen, insbesondere die Buchenholzschicht oder die Holz- bzw. Holzwerkstoffschicht, durch Beschichtung oder Tränkung mit einem Gleitmittel so eigenschaftsverändert wird, dass der Reibfaktor zwischen der Kunststoffkette und der Gleitunterlage erheblich verringert wird. Damit kann die zu transportierende Last bzw. das Gewicht des zu transportierenden Produktes erhöht werden; entsprechend kann bei gleicher Last die Antriebsleistung reduziert werden. Das Gleitmittel wird vorteilhafterweise von der Holzoberfläche absorbiert und wird während des Betriebes in geringsten Mengen an die Gleitoberfläche abgegeben. Dadurch kann ein geringer Reibfaktor über einen langen Betriebszeitraum des Förderers oder der Förderanlage gewährleistet werden.

Ergänzend oder alternativ ist es vorgesehen, dass die Kontaktfläche mit einer elektrisch leitfähigen, insbesondere einer graphithaltigen Substanz getränkt oder beschichtet ist, wodurch der Oberflächenwiderstand der gesamten Förderanlage, also der modularen Kette, der Gleitunterlage und der geerdeten Fördererkonstruktion, deutlich reduziert wird. Eine elektrostatische Aufladung mit spürbaren Entladungsschlägen kann dadurch ausgeschlossen werden.

Die Kontaktfläche der oben beschriebenen Förderanlagen kann somit entweder als eine Vollholzschicht, beispielsweise als Oberfläche einer Sperrholz- oder Multiplexplatte oder einer Furnierschicht einer Spanplatte oder MDF- bzw. HDF-Platte ausgebildet sein. Ebenfalls ist es möglich, dass die gesamte Gleitunterlage aus Buchenholz besteht oder parkettähnlich aufgebaut ist.

Eine Ausgestaltung der Erfindung sieht vor, dass bei der Förderanlage die Gleitunterlage gleichzeitig die Tragkonstruktion für die Kunststoffketten bildet. Aufgrund der hohen statischen Festigkeit, Maßhaltigkeit und der guten Verarbeitbarkeit sowie der hervorragenden Gleiteigenschaften ist es möglich, die Gleitunterlage gleichzeitig als Konstruktionselement einzusetzen, wodurch der konstruktive Aufbau der Förderanlage vereinfacht wird und die Kosten reduziert werden können.

## Patentansprüche

1. Förderanlage mit zumindest einer modularen Kunststoffkette zum Transport von Produkten, wobei die Kunststoffkette auf einer Gleitunterlage entlanggleitet und die Kontaktfläche der Gleitunterlage zu der Kunststoffkette aus einem Holzwerkstoff oder Holz besteht, **dadurch gekennzeichnet, dass** die Kunststoffkette in einer Fördererkonstruktion geführt ist, wobei die Gleitunterlage als Platte ausgebildet und in der Fördererkonstruktion eingelegt ist.

2. Förderanlage nach Anspruch 1, **dadurch gekennzeichnet, dass** die Kontaktfläche der Gleitunterlage zu der Kunststoffkette aus Buchenholz besteht.

3. Förderanlage nach Anspruch 1 oder 2, **dadurch gekennzeichnet, dass** die Gleitunterlage als Multiplexplatte, Sperrholzplatte, Spanplatte oder MDF- oder HDF-Platte ausgebildet ist und als Abschlussschicht eine Furnierholzlage, insbesondere aus Buchenholz aufweist.

4. Förderanlage nach einem der voranstehenden Ansprüche, **dadurch gekennzeichnet, dass** die Kontaktfläche der Gleitunterlage zu der Kunststoffkette mit einem Gleitmittel getränkt oder beschichtet ist.

5. Förderanlage nach einem der voranstehenden Ansprüche, **dadurch gekennzeichnet, dass** die Kontaktfläche mit einer elektrisch leitfähigen, insbesondere einer graphithaltigen Substanz getränkt oder beschichtet ist.

6. Förderanlage nach einem der voranstehenden Ansprüche, **dadurch gekennzeichnet, dass** die Gleitunterlage die Tragkonstruktion für die Kunststoffketten bildet.

## Claims

1. Conveyor system comprising at least one modular plastic chain for conveying products, the plastic chain sliding along a slide base and the contact surface of the slide base to the plastic chain consisting of a wood-based material or wood, **characterized in that** the plastic chain is guided in a conveyor structure, the slide base being designed as a panel and being fitted in the conveyor structure.

2. Conveyor system according to Claim 1, **characterized in that** the contact surface of the slide base to the plastic chain consists of beech wood.

3. Conveyor system according to Claim 1 or 2, **characterized in that** the slide base is designed as a multiplex panel, plywood panel, chipboard panel or MDF or HDF panel and has a cover layer in the form of a veneer wood ply, particularly of beech wood.

4. Conveyor system according to one of the preceding claims, **characterized in that** the contact surface of the slide base to the plastic chain is impregnated or coated with a lubricant.

5. Conveyor system according to one of the preceding claims, **characterized in that** the contact surface is impregnated or coated with an electrically conductive substance, in particular a graphite-containing substance.

6. Conveyor system according to one of the preceding claims, **characterized in that** the slide base forms the support structure for the plastic chains.

## Revendications

1. Installation de transport comprenant au moins une chaîne modulaire en matière synthétique pour le transport de produits, dans laquelle, la chaîne en matière synthétique glisse le long d'un support de glissement et la surface de contact du support de glissement avec la chaîne en matière plastique est une matière à base de bois ou en bois, **caractérisée en ce que** la chaîne en matière synthétique est guidée dans une construction de transport dans laquelle le support de glissement est réalisé sous forme de plaque qui est placée dans la construction de transport.

2. Installation selon la revendication 1, **caractérisée en ce que** la surface de contact du support de glissement avec la chaîne en matière synthétique est en hêtre.

3. Installation selon la revendication 1 ou 2, **caractérisée en ce que** le support de glissement est réalisé sous forme de plaque multiplex, de plaque de contreplaqué, de plaque de particules ou de plaque MDF ou HDF et présente en tant que couche de couverture une couche en bois de contreplacage, notamment en hêtre.

4. Installation selon l'une des revendications précédentes, **caractérisée en ce que** la surface de contact du support de glissement avec la chaîne en matière synthétique est imprégnée ou revêtue par un lubrifiant.

5. Installation selon l'une des revendications précédentes, **caractérisée en ce que** la surface de contact est imprégnée ou revêtue par une substance électriquement conductrice, en particulier contenant du graphite.

6. Installation selon l'une des revendications précédentes, **caractérisée en ce que** le support de glissement constitue la construction portante de la chaîne en matière synthétique.
